(19) Europäisches Patentamt
European Patent Office
Office européen des brevets

(11) **EP 4 171 158 A1**

(12) **EUROPEAN PATENT APPLICATION**
published in accordance with Art. 153(4) EPC

(43) Date of publication:
**26.04.2023 Bulletin 2023/17**

(21) Application number: **21847102.7**

(22) Date of filing: **24.06.2021**

(51) International Patent Classification (IPC):
**H04W 74/08** (2009.01)

(52) Cooperative Patent Classification (CPC):
**H04W 74/08**

(86) International application number:
**PCT/CN2021/102163**

(87) International publication number:
**WO 2022/017118 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.07.2020 CN 202010728144**

(71) Applicant: **Huawei Technologies Co., Ltd.
Shenzhen, Guangdong 518129 (CN)**

(72) Inventors:
• **ZHOU, Jianwei**
**Shenzhen, Guangdong 518129 (CN)**
• **LUO, Hejia**
**Shenzhen, Guangdong 518129 (CN)**
• **XU, Chenlei**
**Shenzhen, Guangdong 518129 (CN)**
• **JIANG, Zhenjun**
**Shenzhen, Guangdong 518129 (CN)**

(74) Representative: **Grünecker Patent- und
Rechtsanwälte
PartG mbB
Leopoldstraße 4
80802 München (DE)**

(54) **METHOD FOR RANDOM ACCESS AND COMMUNICATION DEVICE**

(57) This application discloses a random access method and a communication apparatus, and relates to the field of communication technologies. After determining a correspondence between scanning periods of different scanning areas within coverage of an SSB beam and ROs, a second communication apparatus sends, through broadcasting, a first message including information about the correspondence. A first communication apparatus receives the first message, determines an RO based on a scanning area in which the first communication apparatus is located and the first message, and initiates random access. In this application, because different scanning areas are scanned by using scanning periods that are not completely the same, a capacity of a user in a communication system (a satellite communication system) in which the second communication apparatus is located can be increased, and communication efficiency of the first communication apparatus can be further improved. In addition, a case of resource waste caused by scanning different scanning areas by using a fixed scanning period is further avoided.

First communication apparatus | Second communication apparatus

Step 801: Determine a correspondence between scanning periods of different scanning regions within coverage of an SSB beam and ROs of the different scanning regions

Step 802: Send a first message, where the first message includes information about the correspondence

Step 803: Receive the first message

Step 804: Determine an RO based on a scanning region in which the first communication apparatus is located and the first message, and initiate random access

FIG. 8

EP 4 171 158 A1

## Description

### CROSS-REFERENCE TO RELATED APPLICATIONS

This application claims priority to Chinese Patent Application No. 202010728144.4, filed with the China National Intellectual Property Administration on July 24, 2020 and entitled "RANDOM ACCESS METHOD AND COMMUNICATION APPARATUS", which is incorporated herein by reference in its entirety.

### TECHNICAL FIELD

This application relates to the field of communication technologies, and in particular, to a random access method and a communication apparatus.

### BACKGROUND

When a natural disaster (for example, an earthquake or a debris flow) occurs, a communication facility (an access network device, for example, a base station or a network device) constructed on the ground is prone to be damaged. When the communication facility is damaged, a user cannot perform data transmission by using a terminal device. However, a satellite is slightly affected by a geographical environment. When the natural disaster occurs, the terminal device may still perform data transmission by using satellite communication. In addition, in some regions, such as an ocean, a desert, and a mountain, that are not conducive to erection of a terrestrial base station, the terminal device may also obtain good communication efficiency by using the satellite.

In a related technology, when performing random access, a communication satellite scans a coverage by using a synchronization signal block (synchronization signal block, SSB) beam, so that a signal can be received by a terminal device in the coverage. However, in this manner, scanning is performed based on a fixed scanning period. When regions covered by different communication satellites are different and quantities of users in different regions are also different, scanning based on a same scanning period is not conducive to improving communication efficiency of the terminal device, and scanning a region in which no terminal device exists by using a fixed beam scanning period also causes a waste of resources.

### SUMMARY

Embodiments of this application provide a random access method and a communication apparatus, to improve a user capacity in a satellite system and communication efficiency of a terminal device.

According to a first aspect, an embodiment of this application provides a random access method, which may be performed in the following manner:

A second communication apparatus sends a first message after determining a correspondence between scanning periods of different scanning regions within coverage of an SSB beam and random access occasions (random access channel occasion, RO) of the different scanning regions, where the first message includes information about the correspondence; and a first communication apparatus receives the first message, determines an RO based on a scanning region in which the first communication apparatus is located and the first message, and initiates random access.

In an actual application process, the second communication apparatus may be a satellite, and the first communication apparatus may be a terminal device, or may be a satellite that receives a communication service by using the second communication apparatus. This is not specifically limited herein. Within the coverage of the SSB beam of the second communication apparatus, beam scanning is performed for different scanning regions by using different scanning periods, and scanning regions having different scanning periods correspond to different ROs. Based on this, the second communication apparatus sends, by broadcasting, the first message including the foregoing message, so that the first communication apparatus that receives the first message may initiate random access. In this way, the second communication apparatus receives a better communication service. In this manner, the system user capacity of the second communication apparatus is improved, and communication efficiency of the first communication apparatus is improved. In addition, a resource waste caused by scanning different scanning regions by using a fixed scanning period is also avoided.

In a possible implementation, at least two scanning regions in different scanning regions correspond to different scanning periods.

It should be noted that, in different scanning regions, some scanning regions have a same period and some scanning regions have different periods. This manner is more adapted to a scanning requirement of a satellite system, and a same scanning period does not need to be configured for all different scanning regions. This manner avoids a waste of resources.

In a possible implementation, the scanning period is 5 milliseconds (millisecond, ms), 10 ms, 20 ms, 80 ms, or 160 ms.

By providing some specific scanning periods, signaling overheads for delivering scanning periods can be reduced.

In a possible implementation, at least two scanning regions in different scanning regions correspond to different quantities of ROs.

The quantity of ROs corresponding to the scanning region can be determined in this manner, to improve random access efficiency.

In a possible implementation, the information is an index of the correspondence.

In this manner, the correspondence corresponding to which scanning region can be determined, selected, and sent to the first communication apparatus, so that the first communication apparatus can accurately initiate random access based on the index.

In a possible implementation, the correspondence is a first correspondence or a second correspondence, where in the first correspondence, each scanning region corresponds to a plurality of ROs, and in the second correspondence, different scanning regions correspond to one RO.

It should be noted that, there are two correspondences between the scanning region and the RO, to more accurately determine a corresponding RO.

In a possible implementation, the scanning region in the first correspondence or the second correspondence further corresponds to a plurality of competition-based (competition-based, CB) random access preambles (Preamble).

It should be noted that, the scanning region corresponds to the plurality of CB preambles, so that the second communication apparatus obtains information about which first communication apparatus initiates random access.

In a possible implementation, the second communication apparatus obtains quantities of first communication apparatuses in the different scanning regions, where the quantities include a first quantity of first communication apparatuses that perform data exchange and a second quantity of first communication apparatuses that do not perform data exchange; the second communication apparatus determines weight values of the different scanning regions within the coverage of the SSB beam by performing weighted calculation on the first quantity and the second quantity; and the second communication apparatus determines the scanning periods of the different scanning regions within the coverage of the SSB beam according to a comparison rule between the weight values and the scanning periods.

It should be noted that, after obtaining the quantities of the first communication apparatuses in the different scanning regions, the second communication apparatus determines, by calculation, the scanning periods corresponding to the different scanning regions. By scanning the corresponding scanning regions by using the scanning periods, the user capacity in the system can be improved. In addition, a resource waste caused by scanning different scanning regions based on a same scanning period is avoided.

In a possible implementation, if the correspondence is the first correspondence, the second communication apparatus determines a first calculation rule based on the scanning periods corresponding to the scanning regions, a first scanning period, and a total quantity of ROs, where the first scanning period is a maximum value of a scanning period of a scanning region within the coverage of the SSB beam; and the second communication apparatus determines the quantity of ROs corresponding to each scanning region according to the first calculation rule.

In this application, a quantity of ROs is associated with a scanning period, so that the first communication apparatus can better communicate with the second communication apparatus when initiating random access, and communication efficiency can be improved in this manner.

In a possible implementation, if the correspondence is the second correspondence, the second communication apparatus determines a second calculation rule based on the scanning periods corresponding to the scanning regions, a first scanning period, and a total quantity of CB preambles; and the second communication apparatus determines a quantity of CB preambles corresponding to each scanning region according to the second calculation rule.

It should be noted that, determining the quantity of CB preambles in this manner helps the first communication apparatus to better perform random access.

According to a second aspect, an embodiment of this application provides a communication apparatus. The communication apparatus includes a transceiver unit and a processing unit. The transceiver unit is configured to receive a first message, where the first message includes information about a correspondence, and the correspondence is a correspondence between scanning periods of different scanning regions within coverage of a synchronization signal block SSB beam of a second communication apparatus and random access occasions ROs of the different scanning regions; and a processing unit, configured to: determine a random access occasion RO based on the scanning region in which the first communication apparatus is located and the first message, and initiate random access.

According to a third aspect, an embodiment of this application provides a communication apparatus. The communication apparatus includes a processing unit and a transceiver unit. The processing unit is configured to determine a correspondence between scanning periods of different scanning regions within coverage of a synchronization signal block SSB beam and random access occasions ROs of the different scanning regions. The transceiver unit is configured to send a first message, where the first message includes information about the correspondence.

According to a fourth aspect, this application provides a communication apparatus, including a processor and a memory. The memory stores a computer program. The processor is configured to execute the computer program stored in the memory, so that the method performed by the non-second communication apparatus in the first aspect or any possible design of the first aspect is performed.

According to a fifth aspect, this application provides a communication apparatus, including a processor and a memory. The memory stores a computer program. The processor is configured to execute the computer program stored in the memory, so that the method in the first aspect or any possible design of the first aspect is performed.

According to a sixth aspect, this application provides a communication apparatus, including a logic circuit and an interface circuit. The interface circuit is configured to receive a first message, where the first message includes information about a correspondence; and the correspondence is a correspondence between scanning periods of different scanning regions within coverage of a synchronization signal block SSB beam of a second communication apparatus and random access occasions ROs of the different scanning regions. The logic circuit is configured to perform the method performed by the non-second communication apparatus in the first aspect or any possible design of the first aspect.

According to a seventh aspect, this application provides a communication apparatus, including a logic circuit and an interface circuit. The interface circuit is configured to send a first message, where the first message includes information about a correspondence; and the correspondence is a correspondence between scanning periods of different scanning regions within coverage of a synchronization signal block SSB beam of a second communication apparatus and random access occasions ROs of the different scanning regions. The logic circuit is configured to perform the method in the first aspect or any possible design of the first aspect.

According to an eighth aspect, an embodiment of this application further provides a computer-readable storage medium. The computer-readable storage medium stores a computer readable instruction. When the computer readable instruction is run on a computer, the computer is enabled to perform the method in the first aspect or any possible design of the first aspect.

According to a ninth aspect, an embodiment of this application provides a chip system. The chip system includes a processor, and may further include a memory. The chip system is configured to implement the method in the first aspect or any possible design of the first aspect. The chip system may include a chip, or include a chip and another discrete device.

According to a tenth aspect, an embodiment of this application provides a communication system. The system includes a terminal device and a network device. The terminal device is configured to perform the method in the first aspect or any possible design of the first aspect.

According to an eleventh aspect, an embodiment of this application provides a computer program product including instructions. When the computer program product is run on a computer, the computer is enabled to perform the method in the first aspect or any possible design of the first aspect.

For technical effects that can be achieved in the second aspect to the eleventh aspect, refer to descriptions of technical effects that can be achieved in the corresponding possible design solutions in the first aspect to the third aspect. Details are not described herein again in this application.

## BRIEF DESCRIPTION OF DRAWINGS

FIG 1 is a schematic diagram of an architecture of a terrestrial network communication system;

FIG. 2 is a schematic diagram of an architecture of a non-terrestrial network communication system;

FIG. 3 is a schematic diagram of an architecture of a 5th generation (5th generation, 5G) satellite communication system;

FIG. 4 is a schematic diagram of a beam scanning period of an SSB in a new radio (new radio, NR) system;

FIG. 5 is a first schematic diagram of a correspondence between an SSB beam and ROs in an NR system;

FIG. 6 is a second schematic diagram of a correspondence between SSB beams and an RO in an NR system;

FIG. 7 is a schematic diagram of a PRACH period and an association period in an NR system;

FIG. 8 is a schematic flowchart of a random access method;

FIG. 9 is a schematic diagram of a beam scanning period of an SSB according to an embodiment of this application;

FIG. 10 is a schematic diagram of a correspondence between SSB beams and ROs according to an embodiment of this application;

FIG. 11 is a schematic diagram of a structure of a first communication apparatus according to an embodiment of this application;

FIG. 12 is a schematic diagram of a structure of a second communication apparatus according to an embodiment of this application;

FIG. 13 is a schematic diagram of a structure of another first communication apparatus according to an embodiment of this application;

FIG. 14 is a schematic diagram of a structure of another first communication apparatus according to an embodiment of this application;

FIG. 15 is a schematic diagram of a structure of another second communication apparatus according to an embodiment of this application; and

FIG. 16 is a schematic diagram of a structure of another second communication apparatus according to an embodiment of this application.

## DESCRIPTION OF EMBODIMENTS

Embodiments of this application provide a random access method, a first communication apparatus, and a second communication apparatus. The method and the apparatus are based on a same technical concept. Because problem resolving principles of the method and the apparatus are similar, mutual reference may be made to implementations of the apparatus and the method. Repeated descriptions are not described again. In descriptions of embodiments of this application, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. In addition, it should be understood that in description of this application, terms such as "first", "second", and "third" are merely used for distinguishing and description, but should not be understood as indicating or implying relative importance, or should not be understood as indicating or implying a sequence.

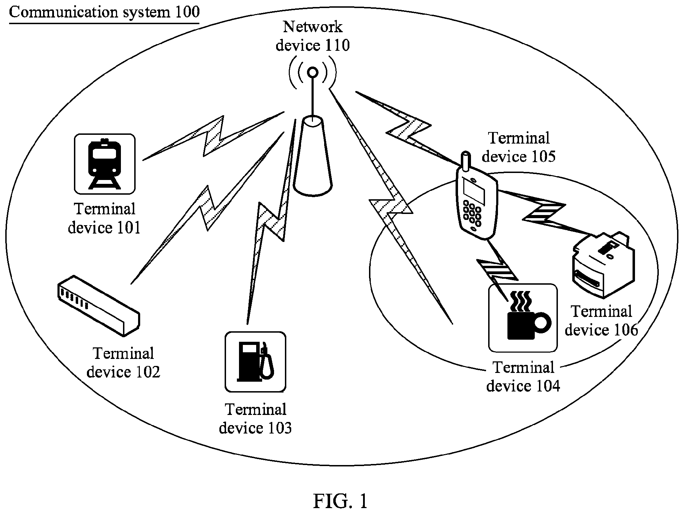

FIG. 1 shows a possible architecture of a terrestrial network communication system. The communication system 100 may include a network device 110 and a terminal device 101 to a terminal device 106. It should be understood that, the communication system 100 may include more or fewer network devices or terminal devices. The network device or the terminal device may be hardware, or software divided in terms of functions, or a combination of the foregoing two. In addition, the terminal device 104 to the terminal device 106 may also form a communication system. For example, the terminal device 105 may send downlink data to the terminal device 104 or the terminal device 106. The network device may communicate with the terminal device by using another device or a network element. The network device 110 may send downlink data to the terminal device 101 to the terminal device 106, or may receive uplink data sent by the terminal device 101 to the terminal device 106. Certainly, the terminal device 101 to the terminal device 106 may also send uplink data to the network device 110, or may receive downlink data sent by the network device 110.

The network device 110 is a node in a radio access network (radio access network, RAN), and may also be referred to as a base station, or may be referred to as a RAN node (or a device). Currently, examples of some access network devices are: a 5G base station (gNodeB, gNB)/NR-nodeB (nodeB, NB), a transmission reception point (transmission reception point, TRP), an evolved nodeB (evolved nodeB, eNB), a radio network controller (radio network controller, RNC), an NB, a base station controller (base station controller, BSC), a base transceiver station (base transceiver station, BTS), a home base station (for example, a home evolved NodeB, or a home NodeB, HNB), a base band unit (base band unit, BBU), a wireless fidelity (wireless fidelity, Wi-Fi) access point (access point, AP), a network device in a 5th generation mobile communication technology (5th mobile generation networks, 5G) communication system, or a network device or a satellite in a possible future communication system. The network device 110 may also be another device having a network device function. For example, the network device 110 may also be a device that functions as a network device in device-to-device (device-to-device, D2D) or machine-to-machine (machine-to-machine, M2M) communication, for example, an Internet of Vehicles device. The network device 110 may also be a network device in a possible future communication system.

The terminal device 101 to the terminal device 106 may also be referred to as user equipment (user equipment, UE), a mobile station (mobile station, MS), a mobile terminal (mobile terminal, MT), or the like. The terminal device 101 to the terminal device 106 are a device that provides voice or data connectivity for a user, or may be an Internet of Things device. For example, the terminal device 101 to the terminal device 106 include a handheld device having a wireless connection function, a vehicle-mounted device, and the like. Currently, the terminal device 101 to the terminal device 106 may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, an automobile, a bicycle, an electric vehicle, an airplane, a ship, a train, or a G-series high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), a smart robot, a workshop device, a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, a smart robot, a hot air balloon, an uncrewed aerial vehicle, or an airplane). The terminal device 101 to the terminal device 106 may also be other devices having a terminal function. For example, the terminal device 101 to the terminal device 106 may also be devices that function as terminals in D2D communication.

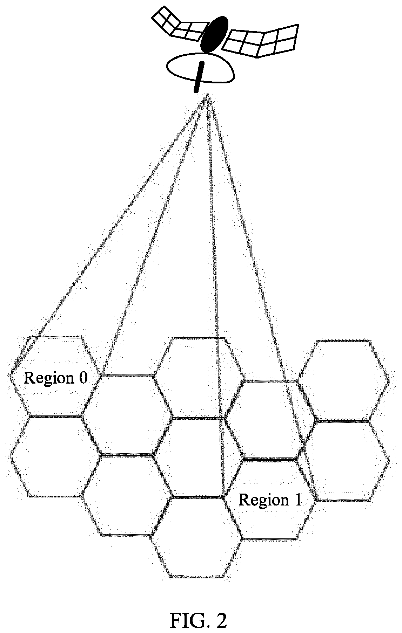

Based on the description of the architecture of the terrestrial network communication system shown in FIG. 1, the random access method provided in embodiments of this application may be applicable to a non-terrestrial network (non-terrestrial networks, NTN) communication system. As shown in FIG. 2, the NTN communication system includes a satellite and a plurality of scanning regions (only a region 1 and a region 2 are used as examples in the figure, but a quantity of scanning regions is not limited in actual application). The scanning region may include a plurality of terminal devices. For the explanation of the terminal devices, refer to the related description of the terminal device 101 to the terminal device 106. The satellite may also be referred to as a high-altitude platform, a high-altitude aircraft, or a satellite base station. When the NTN communication system is associated with the terrestrial network communication system, the satellite may be considered as one or more network devices in the architecture of the terrestrial network communication system. The satellite provides a communication service to the terminal device, and the satellite may also be connected to a core network device. For a structure and a function of a network device 2, also refer to the foregoing description of the network device. For a communication manner between the satellite and the terminal device, also refer to the description in FIG. 1. Details are not described herein again.

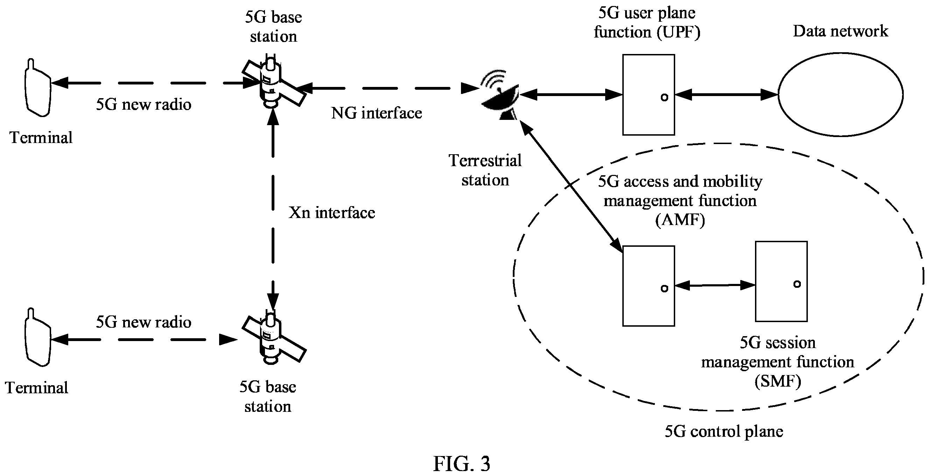

Using 5G as an example, an architecture of a 5G satellite communication system is shown in FIG. 3. A terrestrial terminal device accesses a network by using 5G new radio. A 5G base station is deployed on a satellite and connected to a terrestrial core network by using a radio link. In addition, a radio link exists between satellites to complete signaling interworking and user data transmission between base stations. Devices and interfaces in FIG. 3 are described as follows:

The 5G core network is responsible for services such as user access control, mobility management, session management, user security authentication, and charging. The 5G core network includes a plurality of functional units, which may be divided into control plane and data plane functional entities. An access and mobility management unit (access and mobility management function, AMF) is responsible for user access management, security authentication, and mobility management. A user plane unit (user plane function, UPF) is responsible for managing functions such as user plane data transmission, traffic statistics collection, and security eavesdropping.

A terrestrial station is responsible for forwarding signaling and service data between the satellite base station and the 5G core network.

5G new radio is a radio link between a terminal and a base station.

An Xn interface is an interface between 5G base stations, and is mainly used for signaling interworking such as switching.

An NG interface is an interface between a 5G base station and a 5G core network, and mainly exchanges signaling such as signaling of a non-access stratum (non-access stratum, NAS) of the core network and user service data.

The network device in the terrestrial network communication system and the satellite in the NTN communication system are collectively regarded as network devices. An apparatus configured to implement a function of a network device may be a network device, or may be an apparatus that can support the network device in implementing the function, for example, a chip system, and the apparatus may be mounted in the network device. When the technical solutions provided in embodiments of this application are described below, an example in which the apparatus configured to implement the function of the network device is a satellite is used. It may be understood that, when the method provided in embodiments of this application is applied to the terrestrial network communication system, an action performed by the satellite may be applied to the base station or the network device for execution.

In embodiments of this application, an apparatus configured to implement a function of a terminal device may be a terminal device, or may be an apparatus that can support the terminal device in implementing the function, for example, a chip system. The apparatus may be mounted in the terminal device. In this embodiment of this application, the chip system may include a chip, or may include a chip and another discrete component. In the technical solutions provided in embodiments of this application, an example in which the apparatus configured to implement the function of the terminal device is a terminal or UE is used to describe the technical solutions provided in embodiments of this application.

It should be noted that, a communication protocol for the NTN communication system is not provided in a related technology, and a configuration rule for random access in the NTN communication system is determined based on a communication protocol for a new radio (new radio, NR) system. To better describe the random access solution of the NTN communication system in this application, the following first briefly describes the random access solution of the NR system.

According to the stipulation of the 3rd generation partnership project (3rd generation partnership project, 3GPP) protocol, a 5G network will mainly use two frequency bands in the future: an FR1 frequency band and an FR2 frequency band, respectively. The FR1 frequency band ranges from 450 MHz to 6 GHz, and is usually referred to as a frequency band below 6 GHz. The FR2 frequency band is concentrated in 24.25 GHz to 52.6 GHz, also known as a millimeter wave. The millimeter wave has a short wavelength and a high frequency, and can provide good communication efficiency for the NR system, but has a large loss. Therefore, beamforming is required to improve signal coverage. A main task of beamforming is to compensate for signal fading and distortion caused by factors such as a spatial loss and a multipath effect during radio propagation, and also to reduce interference between co-channel users. In addition, although beamforming improves edge coverage, coverage is narrowed. Therefore, beam scanning is introduced to resolve this problem.

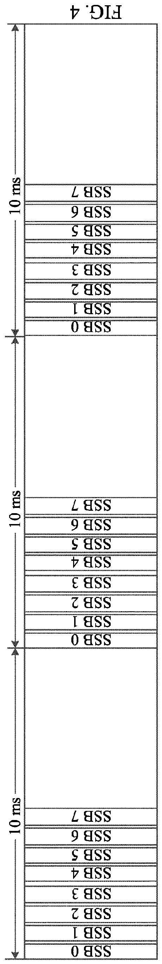

Specifically, beam scanning means that a base station sends only one or more beam directions at a particular moment, and sends different beams at a plurality of moments, so that signals cover all directions required by an entire cell. An SSB set is a set of a plurality of SSBs in a specific time period, each SSB corresponds to one beam direction in a same period, and beam directions of all SSBs in one SSB set cover the entire cell. In the NR system, one SSB set is limited within a 5 ms half-frame and starts from the first slot of the half-frame. Abeam scanning period of an SSB in the NR system is usually set to 5 ms, 10 ms, 20 ms, 40 ms, 80 ms, or 160 ms, and the scanning period of each SSB beam is the same. FIG. 4 is a schematic diagram in which one SSB set includes beams of eight SSBs: an SSB 0 to an SSB 7, and a scanning period of each beam is 10 ms.

In the NR system, the UE sends a preamble only when a beam scanning signal of the SSB covers the UE, so that the communication satellite obtains information that a signal sent by which beam is received by the terminal device. The preamble is sent on a physical random access channel (physical random access channel, PRACH) occasion. To be specific, an association needs to be established between a PRACH sending moment and an SSB sending moment. In addition, the network device may determine, based on an uplink PRACH resource location of the UE, a beam sent by a downlink random access response (random access response, RAR).

ssb-perRACH-Occasion and CB-PreamblesPerSSB in a PRACH parameter configuration are used to implement the following configurations:

a quantity of SSB beams corresponding to each RO; and
a quantity of CB preambles used by each SSB beam.

It should be noted that, when ssb-perRACH-Occasion<1, that is, one SSB corresponds to a plurality of ROs, a correspondence between SSB sending moments and CB preambles in the RACH is as follows:

CB preambles in each PRACH occasion increase in ascending order based on preamble sending occasions;

when RACH frequency-division multiplexing (frequency-division multiplexing, FDM) is configured (there are a plurality of ROs in frequency domain), the correspondence between SSBs and the ROs increases based on a frequency domain index sequence;
when a plurality of PRACH occasions are configured in a PRACH slot, the correspondence between SSBs and the ROs increases based on indexes in the PRACH slot; and
when a plurality of PRACH slots are configured, the correspondence between SSBs and the ROs increases based on indexes of the PRACH slots.

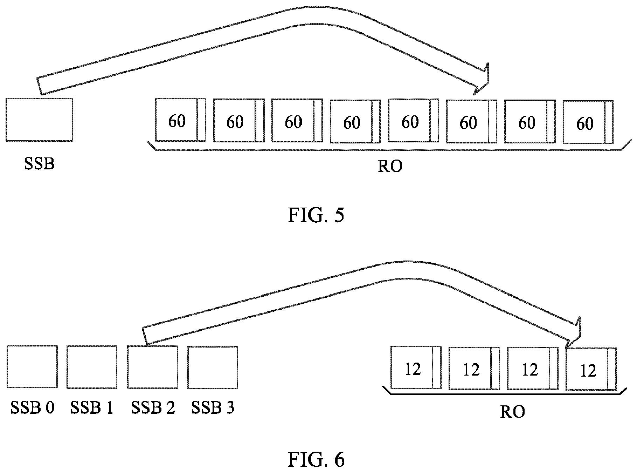

Next, an example in which ssb-perRACH-Occasion=1/8 and CB-PreamblesPerSSB=60 is used for description. As shown in FIG. 5, one SSB corresponds to eight ROs. In addition, CB preambles used by each SSB are 0 to 59. In the figure, each RO includes 60 CB preambles.

In addition, it should be further noted that, when ssb-perRACH-Occasion$\geq$1, that is, a plurality of SSBs correspond to one RO, consecutive CB-PreamblesPerSSB CB preambles starting from n*64/N correspond to an SSB n. N=ssb-perRACH-Occasion, n=CB-PreamblesPerSSB, and n belongs to [0, 64/N]. If ssb-perRACH-Occasion=4 and CB-PreamblesPerSSB=12, as shown in FIG. 6, four SSBs correspond to one RO, and a quantity of competition-based preambles used by each SSB is 12. In this case, CB preambles corresponding to the four SSBs are 0 to 11, 16 to 27, 32 to 43, and 48 to 59, respectively.

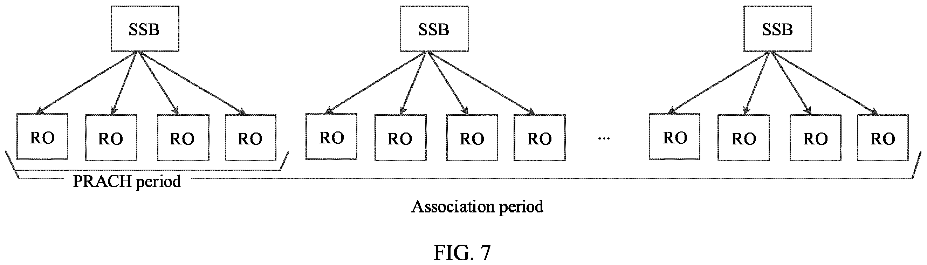

In addition, the PRACH has a plurality of sending moments in time domain and frequency domain, and a mapping relationship needs to be established between each SSB and the PRACH sending moment. In addition, an association period (association period) is introduced herein, that is, a sum of PRACH periods in time domain after all SSBs are mapped to ROs. As shown in FIG. 7, one SSB corresponds to four ROs to form one PRACH period. After all SSBs in the SSB set are mapped to the ROs, a sum of PRACH periods consumed is also the association period.

The correspondence between the SSBs and the ROs is obtained based on the foregoing process, and the correspondence is sent to the terminal device by using the network device, so that the terminal device initiates random access based on the correspondence, thereby better receiving a communication service by using the network device.

In the foregoing description of the random access process of the NR system, a scanning period of an SSB beam and an RO corresponding to each SSB need to be determined, so that the network device better determines which SSB beams are received by UEs in which ranges. However, when performing beam scanning, the network device in the NR system performs beam scanning based on a specified beam scanning period, and a quantity of UEs in the scanning region is not considered. If scanning is still performed based on a fixed scanning period in a region without UE, apparently, resources are wasted. In addition, the ROs corresponding to the SSBs are also evenly distributed, and a quantity of ROs corresponding to each SSB is fixed. When some SSBs do not require a plurality of ROs, a value of the association period is necessarily increased if a same quantity of ROs are still configured, and overheads are increased.

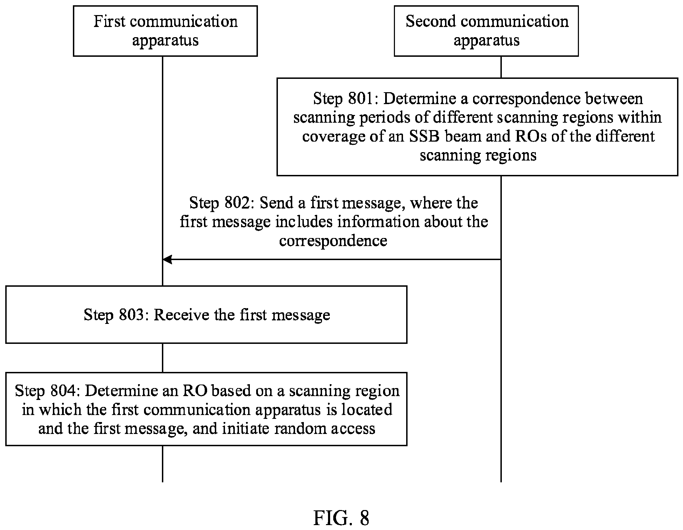

In consideration of the problem in the random access process in the foregoing NR system, when the random access method is applied to the NTN communication system in this application, to improve a user capacity and a user experience degree of the NTN communication system, specifically, refer to the method shown in FIG. 8 for random access. In this figure, data exchange between a first communication apparatus and a second communication apparatus is used for illustration. In an actual application process, the second communication apparatus may be a satellite, and the first communication apparatus may be a terminal device, or may be a satellite that receives a communication service by using the second communication apparatus. This is not specifically limited herein. Any apparatus that complies with a data exchange manner shown in FIG. 8 in this application is applicable to this application.

Step 801: The second communication apparatus determines a correspondence between scanning periods of different scanning regions within coverage of an SSB beam and ROs of the different scanning regions.

Step 802: The second communication apparatus sends a first message, where the first message includes information about the correspondence.

Step 803: The first communication apparatus receives the first message.

Step 804: The first communication apparatus determines an RO based on the scanning region in which the first communication apparatus is located and the first message, and initiates random access.

It should be noted that there may be one or more SSB beams. Regardless of whether the coverage is scanned by using one or more SSB beams, at least two scanning regions in different scanning regions correspond to different scanning periods. If there is one SSB beam, different scanning regions correspond to a same SSB beam, and different scanning regions correspond to different scanning periods. If there are a plurality of SSB beams, different scanning regions may correspond to different SSB beams, and different scanning regions correspond to different scanning periods. For example, the SSB beam coverage includes a scanning region 1, a scanning region 2, a scanning region 3, and a scanning region 4. If scanning periods of the scanning region 1 and the scanning region 2 are different, scanning periods of the scanning region 2, the scanning region 3, and the scanning region 4 are the same, or scanning periods of the four scanning regions are all different.

In addition, it should be further noted that, during beam scanning, although a same scanning period may be used for scanning, if scanning is still performed based on a fixed scanning period in a region without the first communication apparatus, apparently, resources are wasted. In this application, beam scanning is performed for different scanning regions by using different scanning periods, so that not only a user capacity in a system of the second communication apparatus can be improved, but also communication efficiency of the first communication apparatus can be improved. In addition, a resource waste caused by scanning different scanning regions by using a fixed scanning period is also avoided.

For example, the scanning period may be 5 ms, 10 ms, 20 ms, 40 ms, 80 ms, or 160 ms. However, values of these scanning periods may not be limited in actual application. Scanning periods of different scanning regions when beam scanning is performed by using the SSB beam at a same moment may be different. For example, at a moment 1, the scanning period of the scanning region 1 is 5 ms, and the scanning period of the scanning region 2 is 20 ms. Alternatively, scanning periods for a same scanning region at different moments may be different. For example, the scanning period of the scanning region 1 at the moment 1 is 5 ms, and the scanning period of the scanning region 1 at the moment 2 is 20 ms. In this application, different scanning periods are configured in at least two scanning regions, to better meet a beam scanning requirement of a satellite in a non-terrestrial communication system, and a waste of resources is avoided.

In addition, it should be further noted that, at least two scanning regions in different scanning regions correspond to different quantities of ROs, and scanning periods corresponding to the two scanning regions are different. To be specific, scanning regions with different scanning periods correspond to different quantities of ROs.

For example, the correspondence mentioned in the flowchart 8 may be a first correspondence, or may be a second correspondence. In the first correspondence, each scanning region corresponds to a plurality of ROs, and in the second correspondence, different scanning regions correspond to one RO, and the scanning region in the first correspondence or the second correspondence further corresponds to a plurality of CB preambles. This corresponds to the random access process of the foregoing NR system. It should be noted that, if there is one SSB beam, and scanning periods for different scanning regions are not completely the same, the SSB beam in different regions may be separately identified. For example, the SSB beam in the scanning region 1 is identified as SSB 1, and the beam in the scanning region 2 is identified as SSB 2, and ROs and CB preambles corresponding to the SSB 1 and the SSB 2 may be calculated separately. Similarly, for a plurality of SSB beams, different beams may be separately identified, different scanning regions are scanned by using the beams with different identifiers, and ROs and CB preambles corresponding to the SSB beam corresponding to each scanning region are separately calculated.

For example, based on the foregoing description, ROs and CB preambles corresponding to different scanning regions may be separately obtained. To better indicate the first communication apparatus to initiate random access, an index may be set for correspondences in different scanning regions, to better indicate the first communication apparatus, for example, by using the following Table 1. It should be noted that, in actual application, only some rows or some columns in the table may be used. In this table, an example in which the correspondence is only the first correspondence is used, and an index 1 in the table corresponds to the scanning region 1. The scanning period corresponding to the scanning region 1 is 5 ms, and the scanning region 1 corresponds to eight ROs and 60 CB preambles. The scanning period corresponding to the scanning region 2 is 10 ms, and the scanning region 2 corresponds to 16 ROs and 60 CB preambles. It should be noted that, the second communication apparatus may send the correspondence corresponding to the index to the first communication apparatus, so that the first communication apparatus initiates random access based on the correspondence corresponding to the index, thereby improving access efficiency. For example, the second communication apparatus may send the correspondence corresponding to the index 1 to the first communication apparatus, so that the first communication apparatus may initiate random access based on the correspondence.

**Table 1**

| Index number | Scanning region | Scanning period | Quantity of ROs | CB preamble |
|---|---|---|---|---|
| 1 | Scanning region 1 | 5 ms | 8 | 0 to 59 |
| | Scanning region 2 | 10 ms | 16 | 0 to 59 |
| ... | ... | ... | ... | ... |

For example, to better obtain the scanning period corresponding to each scanning region, the second communication apparatus may obtain quantities of first communication apparatuses in different scanning regions, to determine the scanning period corresponding to each scanning region. The quantities include a first quantity of first communication apparatuses that perform data exchange and a second quantity of first communication apparatuses that do not perform data exchange. To better describe the technical solutions of this application, in the following, a terminal device is used to refer to the first communication apparatus, and a satellite is used to refer to the second communication apparatus.

For example, after initial scanning is performed by using the SSB beam, a quantity of terminal devices in each scanning region is obtained, and a scanning period corresponding to each scanning region in next beam scanning may be determined based on the obtained quantity of terminal devices in each scanning region. It should be noted that, the quantity of terminal devices in each scanning region includes a quantity (the first quantity) of terminal devices that perform data exchange under the SSB beam and a quantity (the second quantity) of terminal devices that have accessed the SSB beam and do not perform data exchange. The terminal device that performs data exchange is a terminal device that performs a communication service (for example, video data transmission, book data downloading, and a call service) under the SSB beam. The device that has accessed the SSB beam and does not perform data exchange is a terminal device that receives the communication service under the SSB beam but does not perform data exchange, for example, a terminal device that accesses the SSB beam but does not perform any communication service.

In addition, the satellite performs weighted calculation on the first quantity and the second quantity, to determine weight values of different scanning regions within the coverage of the SSB beam, and determines scanning periods of different scanning regions within the coverage of the SSB beam according to a comparison rule between the weight values and the scanning periods. During execution, the weight values may be calculated with reference to Formula 1. Formula 1 is merely used as an example for description. In actual application, the weight values may also be determined according to another calculation rule. This is not specifically limited herein.

$$w_{SSB} = \alpha \times N_{ue} + (1-\alpha) \times N_{ue\_access} \qquad \text{Formula 1}$$

$N_{ue}$ represents the quantity of terminal devices that perform data exchange under the SSB beam; $N_{ue\_access}$ represents the quantity of terminal devices that have accessed the SSB beam and do not perform data exchange; and $\alpha$ is a weight coefficient, is used to represent a proportion of $N_{ue}$ in the quantity of terminal devices that access the SSB beam, and has a value range of 0 to 1.

It should be noted that, after each scanning by using the SSB beam, a quantity of terminal devices in the scanning region is fed back. During beam scanning, a scanning period corresponding to each scanning region is determined with reference to a quantity of terminal devices that is obtained after beam scanning at a previous moment, to better calculate the scanning period corresponding to each scanning region. This manner does not completely depend on a quantity of terminal devices that is obtained by initial scanning. After each beam scanning, the quantity of terminal devices in each scanning region is updated in real time. Accuracy of the scanning period that corresponds to each scanning region and that is determined in this manner is higher, and more users can be accommodated in a non-terrestrial communication system. For example, in the 1st ms, the satellite performs beam scanning, and obtains that a quantity of terminal devices that access the SSB beam in the scanning region 1 is 1 million, a quantity of terminal devices that access the SSB beam in the scanning region 2 is 500,000, and a quantity of terminal devices that access the SSB beam in the scanning region 3 is 10,000. If the satellite performs beam scanning again in the 3rd ms, the beam scanning may be performed with reference to the quantity of terminal devices that access the SSB beam in each scanning region during the beam scanning in the 1st ms (namely, the previous moment). During execution, a weight value may be determined with reference to Formula 2:

$$w_{SSB} = \beta \times \left( N_{ue-pre} + N_{ue-access-pre} \right) + (1-\beta) \times \left( N_{ue} + N_{ue-access} \right)$$  Formula 2

$N_{ue-pre}$ indicates the quantity of terminal devices that perform data exchange at a previous moment under the SSB beam; $N_{ue-access-pre}$ indicates the quantity of terminal devices that have accessed the SSB beam at the previous moment and do not perform data exchange; $N_{ue}$ indicates the quantity of terminal devices that perform data exchange at a current moment under a first beam; $N_{ue-access}$ indicates the quantity of terminal devices that have accessed the SSB beam and do not perform data exchange at the current moment; and $\beta$ is a weight coefficient, is used to indicate a proportion of $N_{ue-pre} + Nu_{e-access-pre}$ in the quantity of terminal devices that access the SSB beam, and has a value range of 0 to 1.

In addition, the comparison rule between the weight values and the scanning periods may be stored in the satellite, and may be stored in a form of a table, a histogram, a dot chart, or the like. The following uses an example in which the storage form is a table for description, as shown in Table 2.

**Table 2**

| Scanning period of SSB beam | |
|---|---|
| $W_{SSB}$ | Scanning period |
| ... | 5 ms |
| ... | 10 ms |
| ... | ... |

It should be noted that, in actual application, only some rows or some columns in the table may be used, and the satellite may determine a corresponding scanning period based on a weight value of a row in Table 2, to determine a beam scanning period.

For example, when sending first information to the terminal device, the satellite may indicate the scanning period of each scanning region by using the following signaling. The signaling is merely used as an example for description, but does not specifically limit specific content and presentation form of the signaling. All signaling that can indicate content covered by the first information to the terminal device is applicable to this application. For example, the signaling may be as follows:

NTN-ServingCellConfigCommon information element//NTN serving cell common configuration information

-- ASN1START //signaling start

-- TAG-NTNSERVINGCELLCONFIGCOMMON-START

NTN-ServingCellConfigCommon:: = Sequence {//signaling name: NTN common serving cell configuration information

...

ssb-periodicityServingCell Sequence{//scanning period

ssb-sub-periodicityServingCell Sequence{

ssb-periodicity ENUMERATED {ms5, ms10, ms20, ms40, ms80, ms160, spare2, spare1}OPTIONAL,--

Need S//scanning period: 5 ms, 10 ms, 20 ms, 40 ms, 80 ms, or 160 ms

ssb_index...INTEGER (1..64),//value range of SSB index numbers

}

...

}

...

}

-- TAG-SERVINGCELLCONFIGCOMMON-STOP

-- ASN1STOP

In actual application, only some of the foregoing listed scanning periods may be included.

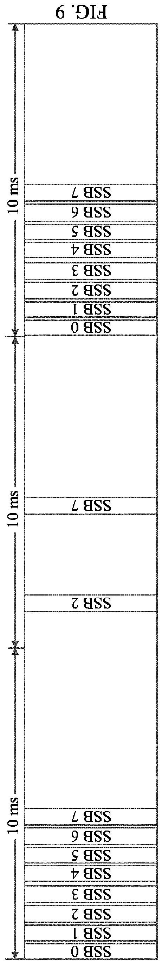

It should be noted that, the satellite may configure a scanning period based on the weight value $w_{SSB}$. If a quantity of terminal devices that access the SSB beam in the current scanning region is larger, a corresponding scanning period is shorter. To clearly describe the correspondence between the scanning region and the scanning period, under a same SSB beam, in FIG. 9, the SSB beam corresponding to the scanning region 1 is identified by using the SSB 1, and similarly, the SSB beam corresponding to the scanning region 2 is identified by using the SSB 2. Identifiers corresponding to other scanning regions are not described herein again. Assuming that a relatively large quantity of terminal devices access the SSB beam in the scanning region 2 and the scanning region 7, scanning periods of the scanning region 2 and the scanning region 7 are shorter. The scanning periods corresponding to the scanning region 2 and the scanning region 7 are separately 10 ms, and the scanning periods corresponding to the other scanning regions are separately 20 ms.

For example, if the correspondence is the first correspondence, the satellite determines a first calculation rule based on the scanning periods corresponding to the scanning regions, a first scanning period, and a total quantity of ROs, where the first scanning period is a maximum value of a scanning period of a scanning region within the coverage of the SSB beam; and the satellite determines the quantity of ROs corresponding to each scanning region according to the first calculation rule. If the correspondence is the second correspondence, the satellite determines a second calculation rule based on the scanning periods corresponding to the scanning regions, a first scanning period, and a total quantity of CB preambles; and the satellite determines a quantity of CB preambles corresponding to each scanning region according to the second calculation rule.

It should be noted that, if the correspondence is the first correspondence, during execution, the quantity of ROs corresponding to each scanning region may be determined with reference to the following Formula 3.

$$ssb_{perRACHoccasion_{ntn,i}} = \left\lfloor \frac{ssb_{perRACHoccasion,sum}}{\sum_{i=0} \frac{\max(P_{ssb},i)}{P_{ssb},i}} \right\rfloor \times \frac{\max(P_{ssb},i)}{P_{ssb},i} \qquad \text{Formula 3}$$

When $\dfrac{ssb_{perRACHoccasion,\ sum}}{\sum_{i=0} \frac{\max(P_{ssb},i)}{P_{ssb},i}}$ is aliquant, a remainder may be allocated in sequence based on the index sequence. For example, if indexes are 0 to 3 and the remainder is 3, one more RO is separately configured for the index 0, the index 1, and the index 2.

If the correspondence is the second correspondence, during execution, the quantity of ROs corresponding to each scanning region may be determined with reference to the following Formula 4.

$$CB_{preamblesperSSBntn,i} = \left\lfloor \frac{CB_{preamblesperSSB,sum}}{\sum_{i=0} \frac{\max(P_{ssb},i)}{P_{ssb},i}} \right\rfloor \times \frac{\max(P_{ssb},i)}{P_{ssb},i} \qquad \text{Formula 4}$$

When $\dfrac{CB_{preamblesperSSB,sum}}{\sum_{i=0} \frac{\max(P_{ssb},i)}{P_{ssb},i}}$ is aliquant, a remainder may be allocated in sequence based on the index sequence. For example, if indexes are 0 to 3 and the remainder is 3, one more CB preamble is separately configured for the index 0, the index 1, and the index 2.

$ssb_{perRACHoccasion_{ntn,i}}$ is a quantity of SSB i beams corresponding to each RO in the NTN, $ssb_{perRACHoccasion,sum}$ is a total quantity of ROs, $CB_{preamblesperSSBntn,i}$ is a quantity of consecutive preambles in each RO in the NTN that correspond to the SSB i beams, $CB_{preamblesperSSB,sum}$ is a total quantity of competition-based preambles in one RO, and $P_{ssb,i}$ is a period of the SSB i.

For example, when sending first information to the terminal device, the satellite may indicate the correspondence between each scanning region and the RO by using the following signaling. The signaling is merely used as an example for description, but does not specifically limit specific content and presentation form of the signaling. All signaling that can indicate content covered by the first information to the terminal device is applicable to this application. For example, the signaling is as follows:

NTN-RACH-ConfigCommon information element//NTN RACH common configuration information

-- ASN1START

-- TAG-RACH-CONFIGCOMMON-START//signaling start

RACH-ConfigCommon :: = Sequence {

   ...

ntn-ssb-perRACH-OccasionAndCB-PreamblesPerSSB...SEQUENCE{//signaling name: correspondence between NTN SSB, RO, and CB-Preambles

ntn-ssb-sub-perRACH-OccasionAndCB-PreamblesPerSSB...CHOICE {//correspondence between SSB and RO in NTN

oneEighth...//one SSB corresponds to eight ROs...ENUMERATED... {n4, n8, n12, n16, n20, n24, n28, n32, n36, n40, n44, n48, n52, n56, n60, n64},

oneFourth //one SSB corresponds to four ROs...ENUMERATED

{n4, n8, n12, n16, n20, n24, n28, n32, n36, n40, n44, n48, n52, n56, n60, n64},

oneHalf //one SSB corresponds to two ROs...ENUMERATED

{n4, n8, n12, n16, n20, n24, n28, n32, n36, n40, n44, n48, n52, n56, n60, n64},

one...//one SSB corresponds to one RO ENUMERATED

{n4, n8, n12, n16, n20, n24, n28, n32, n36, n40, n44, n48, n52, n56, n60, n64},

two.../two SSBs correspond to one RO

ENUMERATED {n4, n8, n12, n16, n20, n24, n28, n32},

four...INTEGER (1..16),//four SSBs correspond to one RO

eight...INTEGER (1..8),//eight SSBs correspond to one RO

sixteen...INTEGER (1..4)//16 SSBs correspond to one RO

}

ssb_index INTEGER (1..64),//SSB index number

}

...

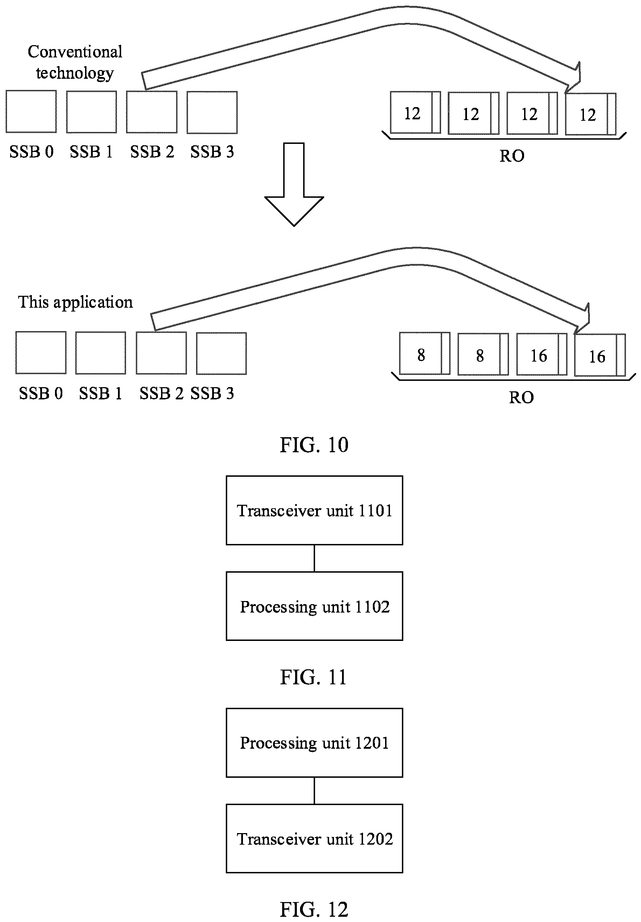

In actual application, only some of the foregoing listed correspondences between the SSB and the RO may be included. The following uses an example for description. If the correspondence is the second correspondence, as shown in the following FIG. 10, ssb-perRACH-Occasion=4, and CB-PreamblesPerSSB=12. To be specific, four scanning regions correspond to one RO, and each scanning region corresponds to 12 preambles. In a related technology, preambles are evenly distributed, that is, each scanning region corresponds to 12 preambles. However, in this application, because scanning periods of different scanning regions are not completely the same, for example, the scanning periods are respectively 10 ms, 10 ms, 5 ms, and 5 ms, quantities of preambles corresponding to the scanning regions after calculation are respectively 8, 8, 16, and 16.

It should be noted that, in this application, the correspondence between the scanning region and the RO may be stored by using the following Table 3 and Table 4. When the correspondence is the first correspondence, Table 3 is a correspondence table in which one scanning region corresponds to a plurality of ROs. Table 3 mainly includes information such as the scanning period, the scanning region, the RO, and the index number. It should be noted that, in actual application, only some rows or some columns in the table may be used. Table 3 is shown as follows. It is assumed that there are four scanning regions, an SSB beam corresponds to a plurality of ROs, a total quantity of current ROs is 48, and SSB beam scanning periods are 5 ms, 10 ms, and 20 ms. A correspondence between the SSB beam and a quantity of ROs is shown in Table 3. An index number may be notified to the terminal device by using a first message, and the terminal device may perform correspondence on the scanning region and the RO based on the correspondence according to an index sequence. Using the index number 1 as an example, after calculation is performed by using the foregoing Formula 3, it can be learned that $ssb_{perRACHoccasion,sum}$ is 48 and $\sum_{i=0} \frac{\max(P_{ssb},i)}{P_{ssb},i}$ is 6. For a region 0 with a scanning period of 5 ms, $\frac{\max(P_{ssb},i)}{P_{ssb},i}$ is 2. 6 is aliquot by 48. Therefore, it can be learned by calculation that the quantity of ROs corresponding to the region 0 is 16. Using the index number 2 as an example, after calculation is performed by using the foregoing Formula 3, it can be learned that $ssb_{perRACHoccasion,sum}$ is 48 and $\sum_{i=0} \frac{\max(P_{ssb},i)}{P_{ssb},i}$ is 9. For a region 0 with a scanning period of 5 ms, $\frac{\max(P_{ssb},i)}{P_{ssb},i}$ is 4. 9 is aliquant by 8, and a remainder is 3. Therefore, it can be learned by calculation that the quantity of ROs corresponding to the region 0 is 21.

**Table 3**

| Index number | | Region 0 | Region 1 | Region 2 | Region 3 |
|---|---|---|---|---|---|
| 0 | Scanning period | 5 ms | 10 ms | 10 ms | 10 ms |
| | Quantity of ROs | 17 | 11 | 10 | 10 |
| 1 | Scanning period | 5 ms | 5 ms | 10 ms | 10 ms |
| | Quantity of ROs | 16 | 16 | 8 | 8 |
| 2 | Scanning period | 5 ms | 10 ms | 20 ms | 10 ms |
| | Quantity of ROs | 21 | 11 | 6 | 10 |
| 3 | Scanning period | 5 ms | 20 ms | 20 ms | 10 ms |
| | Quantity of ROs | 20 | 8 | 8 | 12 |
| 4 | Scanning period | 10 ms | 10 ms | 20 ms | 20 ms |
| | Quantity of ROs | 16 | 16 | 8 | 8 |
| ... | ... | ... | ... | ... | ... |
| | ... | ... | ... | ... | ... |

When the correspondence is the second correspondence, Table 4 is a correspondence table in which a plurality of scanning regions correspond to one RO. Table 4 mainly includes information such as the scanning period, the scanning region, the preamble, and the index number. Similarly, in actual application, only some rows or some columns in the table may be used. Table 4 is shown as follows. It is assumed that there are four scanning regions, to be specific, four SSB scanning regions correspond to one RO, a total quantity of preambles used for contention is 48, and SSB beam scanning periods may be 5 ms, 10 ms, and 20 ms. A correspondence between the scanning region and the preamble is shown in Table 4. The index number may be notified to the terminal device by using the first message, and the terminal device may perform correspondence on the scanning region and the preamble based on the correspondence according to an index sequence. Using the index number 1 as an example, after calculation is performed by using the foregoing Formula 4, it can be learned that $CB_{preamblesperSSBntn,i}$ is 48 and $\sum_{i=0} \frac{\max(P_{ssb},i)}{P_{ssb},i}$ is 6. For a region 0 with a scanning period of 5 ms, $\frac{\max(P_{ssb},i)}{P_{ssb},i}$ is 2. 6 is aliquot by 48. Therefore, it can be learned by calculation that the quantity of preambles corresponding to the region 0 is 16. Using the index number 2 as an example, after calculation is performed by using the foregoing Formula 4, it can be learned that $CB_{preamblesperSSBntn,i}$ is 48 and $\sum_{i=0} \frac{\max(P_{ssb},i)}{P_{ssb},i}$ is 9. For a region 0 with a scanning period of 5 ms, $\frac{\max(P_{ssb},i)}{P_{ssb},i}$ is 4. 9 is aliquant by 48, and a remainder is 3. Therefore, it can be learned by calculation that the quantity of CB preambles corresponding to the region 0 is 21.

**Table 4**

| Index number | | Region 0 | Region 1 | Region 2 | Region 3 |
|---|---|---|---|---|---|
| 0 | Scanning period | 5 ms | 10 ms | 10 ms | 10 ms |
| | Quantity of CB preambles | 17 | 11 | 10 | 10 |
| 1 | Scanning period | 5 ms | 5 ms | 10 ms | 10 ms |
| | Quantity of CB preambles | 16 | 16 | 8 | 8 |
| 2 | Scanning period | 5 ms | 10 ms | 20 ms | 10 ms |
| | Quantity of CB preambles | 21 | 11 | 6 | 10 |
| 3 | Scanning period | 5 ms | 20 ms | 20 ms | 10 ms |
| | Quantity of CB preambles | 20 | 8 | 8 | 12 |
| 4 | Scanning period | 10 ms | 10 ms | 20 ms | 20 ms |
| | Quantity of CB preambles | 16 | 16 | 8 | 8 |
| ... | ... | ... | ... | ... | ... |
| | ... | ... | ... | ... | ... |

Based on a same inventive concept, this application provides a first communication apparatus. As shown in FIG. 11, the first communication apparatus includes a transceiver unit 1101 and a processing unit 1102.

The transceiver unit 1101 is configured to receive a first message, where the first message includes information about a correspondence, and the correspondence is a correspondence between scanning periods of different scanning regions within coverage of a synchronization signal block SSB beam of a second communication apparatus and random access occasions ROs of the different scanning regions. The processing unit 1102 is configured to: determine a random access occasion RO based on the scanning region in which the first communication apparatus is located and the first message, and initiate random access.

In this application, within the coverage of the SSB beam of the second communication apparatus, beam scanning is performed for different scanning regions by using different scanning periods, and scanning regions having different scanning periods correspond to different ROs. Based on this, the second communication apparatus sends, by broadcasting, the first message including the foregoing message, so that the first communication apparatus that receives the first message may initiate random access, and the second communication apparatus better receives a communication service. In this manner, the system user capacity of the second communication apparatus is improved, and communication efficiency of the first communication apparatus is improved. In addition, a resource waste caused by scanning different scanning regions by using a fixed scanning period is avoided.

For example, at least two scanning regions in different scanning regions correspond to different scanning periods.

For example, the scanning period is 5 ms, 10 ms, 20 ms, 40 ms, 80 ms, or 160 ms.

For example, at least two scanning regions in different scanning regions correspond to different quantities of ROs.

For example, the information is an index of the correspondence.

For example, the correspondence is a first correspondence or a second correspondence, where in the first correspondence, each scanning region corresponds to a plurality of ROs, and in the second correspondence, different scanning regions correspond to one RO.

For example, the scanning region in the first correspondence or the second correspondence further corresponds to a plurality of CB preambles.

This application provides a second communication apparatus. As shown in FIG. 12, the second communication apparatus includes a processing unit 1201 and a transceiver unit 1202.

The processing unit 1201 is configured to determine a correspondence between scanning periods of different scanning regions within coverage of a synchronization signal block SSB beam and random access occasions ROs of the different scanning regions. The transceiver unit 1202 is configured to send a first message, where the first message includes information about the correspondence.

Within the coverage of the SSB beam of the second communication apparatus, beam scanning is performed for different scanning regions by using different scanning periods, and scanning regions having different scanning periods correspond to different ROs. Based on this, the second communication apparatus sends, by broadcasting, the first message including the foregoing message, so that the first communication apparatus that receives the first message may initiate random access, and the second communication apparatus better receives a communication service. In this manner, the system user capacity of the second communication apparatus is improved, and communication efficiency of the first communication apparatus is improved. In addition, a resource waste caused by scanning different scanning regions by using a fixed scanning period is avoided.

For example, at least two scanning regions in different scanning regions correspond to different scanning periods.

For example, the scanning period is 5 ms, 10 ms, 20 ms, 40 ms, 80 ms, or 160 ms.

For example, at least two scanning regions in different scanning regions correspond to different quantities of ROs.

For example, the information is an index of the correspondence.

For example, the correspondence is a first correspondence or a second correspondence, where in the first correspondence, each scanning region corresponds to a plurality of ROs, and in the second correspondence, different scanning regions correspond to one RO.

For example, the scanning region in the first correspondence or the second correspondence further corresponds to a plurality of CB preambles.

For example, the processing unit 1201 is further configured to: obtain quantities of first communication apparatuses in the different scanning regions, where the quantities include a first quantity of first communication apparatuses that perform data exchange and a second quantity of first communication apparatuses that do not perform data exchange; determine weight values of the different scanning regions within the coverage of the SSB beam by performing weighted calculation on the first quantity and the second quantity; and determine the scanning periods of the different scanning regions within the coverage of the SSB beam according to a comparison rule between the weight values and the scanning periods.

For example, the processing unit 1201 is further configured to: if the correspondence is the first correspondence, determine a first calculation rule based on the scanning periods corresponding to the scanning regions, a first scanning period, and a total quantity of ROs, where the first scanning period is a maximum value of a scanning period of a scanning region within the coverage of the SSB beam; and determine the quantity of ROs corresponding to each scanning region according to the first calculation rule.

For example, the processing unit 1201 is further configured to: if the correspondence is the second correspondence, determine a second calculation rule based on the scanning periods corresponding to the scanning regions, a first scanning period, and a total quantity of CB preambles; and
determine a quantity of CB preambles corresponding to each scanning region according to the second calculation rule.

It should be noted that, the examples in application scenarios in this application show only some possible implementations, to better understand and describe the method in this application. A person skilled in the art may obtain some examples of variants based on the reference signal indication method provided in this application.

To implement functions in the method provided in embodiments of this application, the terminal device may include a hardware structure and/or a software module, and implement the foregoing functions in a form of a hardware structure, a software module, or a hardware structure plus a software module. Whether one of the foregoing functions is performed in the manner of a hardware structure, a software module, or a hardware structure and a software module depends on a specific application and design constraints of the technical solutions.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

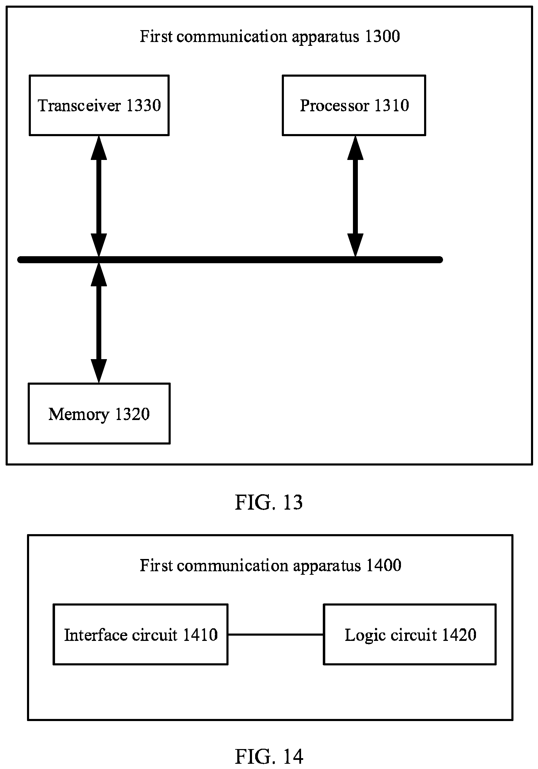

Based on a same concept, FIG. 13 shows a first communication apparatus 1300 according to this application. For example, the first communication apparatus 1300 may be a chip or a chip system. Optionally, in this embodiment of this application, the chip system may include a chip, or may include a chip and another discrete component.

The first communication apparatus 1300 may include at least one processor 1310. The first communication apparatus 1300 may further include at least one memory 1320, configured to store a computer program, program instructions, and/or data. The memory 1320 is coupled to the processor 1310. Coupling in this embodiment of this application is indirect coupling or a communication connection between apparatuses, units, or modules for information exchange between the apparatuses, the units, or the modules, and may be in electrical, mechanical, or other forms. The processor 1310 may cooperate with the memory 1320. The processor 1310 may execute the computer program stored in the memory 1320. Optionally, the at least one memory 1320 may be integrated into the processor 1310.

The first communication apparatus 1300 may further include a transceiver 1330. The first communication apparatus 1300 may exchange information with another device by using the transceiver 1330. The transceiver 1330 may be a circuit, a bus, a transceiver, or any other apparatus that may be configured to perform information exchange.

In a possible implementation, the first communication apparatus 1300 may be applied to the foregoing network device. Specifically, the first communication apparatus 1300 may be the foregoing network device, or may be an apparatus that can support the network device in implementing any one of the foregoing embodiments. The memory 1320 stores a computer program, program instructions, and/or data that are necessary to implement a function of the network device in any one of the foregoing embodiments. The processor 1310 may execute the computer program stored in the memory 1320, to complete the method in any one of the foregoing embodiments.

A specific connection medium between the transceiver 1330, the processor 1310, and the memory 1320 is not limited in this embodiment of this application. In this embodiment of this application, in FIG. 13, the memory 1320, the processor 1310, and the transceiver 1330 are connected by using a bus. The bus is indicated by using a thick line in FIG. 13. A connection manner between other components is merely an example for description, and is not limited. The bus may be classified into an address bus, a data bus, a control bus, and the like. For ease of representation, only one bold line is used for representation in FIG. 13, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor, or the like. The steps of the method disclosed with reference to embodiments of this application may be directly performed by a hardware processor, or may be performed by a combination of hardware and software modules in the processor.

In this embodiment of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store a computer program, program instructions, and/or data.

Based on the foregoing embodiments, with reference to FIG. 14, an embodiment of this application further provides another first communication apparatus 1400, including an interface circuit 1410 and a logic circuit 1420. The interface circuit 1410 is configured to receive a first message, where the first message includes information about a correspondence; and the correspondence is a correspondence between scanning periods of different scanning regions within coverage of an SSB beam of a second communication apparatus and ROs of the different scanning regions.

The logic circuit 1420 is configured to run the code instruction, to perform the method in any one of the foregoing embodiments.

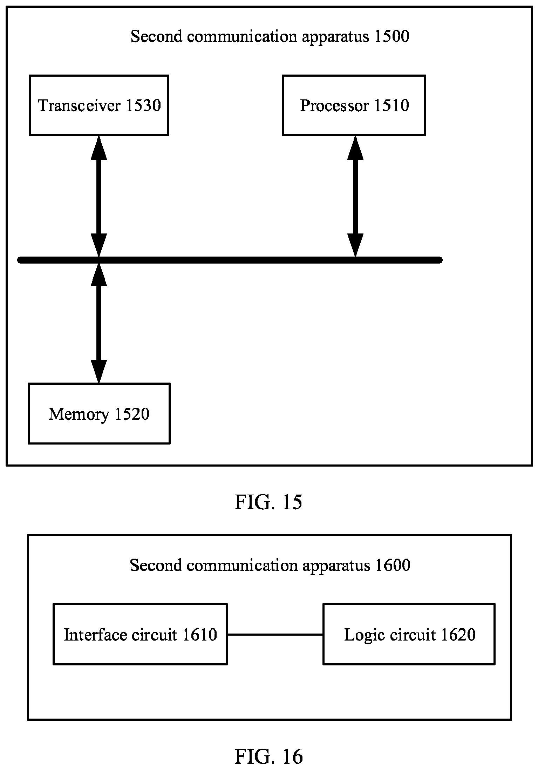

Based on a same concept, FIG. 15 shows a second communication apparatus 1500 according to this application. For example, the communication apparatus 1500 may be a chip or a chip system. In this embodiment of this application, the chip system may include a chip, or may include a chip and another discrete component.

The second communication apparatus 1500 may include at least one processor 1510. The second communication apparatus 1500 may further include at least one memory 1520, configured to store a computer program, program instructions, and/or data. The memory 1520 is coupled to the processor 1510. Coupling in this embodiment of this application is indirect coupling or a communication connection between apparatuses, units, or modules for information exchange between the apparatuses, the units, or the modules, and may be in electrical, mechanical, or other forms. The processor 1510 may cooperate with the memory 1520. The processor 1510 may execute the computer program stored in the memory 1520. Optionally, the at least one memory 1520 may be integrated into the processor 1510.

The second communication apparatus 1500 may further include a transceiver 1530. The communication apparatus 1500 may exchange information with another device by using the transceiver 1530. The transceiver 1530 may be a circuit, a bus, a transceiver, or any other apparatus that may be configured to perform information exchange.

In a possible implementation, the second communication apparatus 1500 may be applied to the foregoing network device. Specifically, the second communication apparatus 1500 may be the foregoing network device, or may be an apparatus that can support the network device in implementing any one of the foregoing embodiments. The memory 1520 stores a computer program, program instructions, and/or data that are necessary to implement a function of the network device in any one of the foregoing embodiments. The processor 1510 may execute the computer program stored in the memory 1520, to complete the method in any one of the foregoing embodiments.

A specific connection medium between the transceiver 1530, the processor 1510, and the memory 1520 is not limited in this embodiment of this application. In this embodiment of this application, in FIG. 15, the memory 1520, the processor 1510, and the transceiver 1530 are connected by using a bus. The bus is indicated by using a thick line in FIG. 15. A connection manner between other components is merely an example for description, and is not limited. The bus may be classified into an address bus, a data bus, a control bus, and the like. For ease of representation, only one bold line is used for representation in FIG. 15, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor, or the like. The steps of the method disclosed with reference to embodiments of this application may be directly performed by a hardware processor, or may be performed by a combination of hardware and software modules in the processor.

In this embodiment of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store a computer program, program instructions and/or data.

Based on the foregoing embodiments, with reference to FIG. 16, an embodiment of this application further provides another second communication apparatus 1600, including an interface circuit 1610 and a logic circuit 1620. The interface circuit 1610 is configured to send a first message, where the first message includes information about a correspondence; and the correspondence is a correspondence between scanning periods of different scanning regions within coverage of a synchronization signal block SSB beam of the second communication apparatus and random access occasions ROs of the different scanning regions.

The logic circuit 1620 is configured to run the code instruction, to perform the method in any one of the foregoing embodiments.

Based on the foregoing embodiments, an embodiment of this application further provides a readable storage medium. The readable storage medium stores instructions. When the instructions are executed, the method performed by the safety detection device in any one of the foregoing embodiments is implemented. The readable storage medium may include any medium, for example, a USB flash drive, a removable hard disk, a read-only memory, a random access memory, a magnetic disk, or an optical disc, that can store program code.

Persons skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

**Claims**

1. A random access method, comprising:

   receiving, by a first communication apparatus, a first message, wherein the first message comprises information about a correspondence, and the correspondence is a correspondence between scanning periods of different scanning regions within coverage of a synchronization signal block SSB beam of a second communication apparatus and random access occasions ROs of the different scanning regions; and
   determining a random access occasion RO based on a scanning region in which the first communication apparatus is located and the first message, and initiating random access.

2. The method according to claim 1, wherein at least two scanning regions in different scanning regions correspond to different scanning periods.

3. The method according to claim 2, wherein the scanning period is 5 milliseconds ms, 10 ms, 20 ms, 40 ms, 80 ms, or 160 ms.

4. The method according to any one of claims 1 to 3, wherein at least two scanning regions in different scanning regions correspond to different quantities of ROs.

5. The method according to any one of claims 1 to 4, wherein the information is an index of the correspondence.

6. The method according to any one of claims 1 to 5, wherein the correspondence is a first correspondence or a second correspondence;

   in the first correspondence, each scanning region corresponds to a plurality of ROs; and
   in the second correspondence, different scanning regions correspond to one RO.

7. The method according to claim 6, wherein the scanning region in the first correspondence or the second correspondence further corresponds to a plurality of competition-based random access preambles.

8. A random access method, comprising:

   determining, by a second communication apparatus, a correspondence between scanning periods of different scanning regions within coverage of a synchronization signal block SSB beam and random access occasions ROs of the different scanning regions; and
   sending a first message, wherein the first message comprises information about the correspondence.

9. The method according to claim 8, wherein at least two scanning regions in different scanning regions correspond to different scanning periods.

10. The method according to claim 9, wherein the scanning period is 5 milliseconds ms, 10 ms, 20 ms, 40 ms, 80 ms, or 160 ms.

11. The method according to any one of claims 8 to 10, wherein at least two scanning regions in different scanning regions correspond to different quantities of ROs.

**12.** The method according to any one of claims 8 to 11, wherein the information is an index of the correspondence.

**13.** The method according to any one of claims 8 to 12, wherein the correspondence is a first correspondence or a second correspondence;

in the first correspondence, each scanning region corresponds to a plurality of ROs; and
in the second correspondence, different scanning regions correspond to one RO.

**14.** The method according to claim 13, wherein the scanning region in the first correspondence or the second correspondence further corresponds to a plurality of competition-based random access preambles.

**15.** The method according to any one of claims 8 to 14, wherein the method further comprises:

obtaining, by the second communication apparatus, quantities of first communication apparatuses in the different scanning regions, wherein the quantities comprise a first quantity of first communication apparatuses that perform data exchange and a second quantity of first communication apparatuses that do not perform data exchange; determining weight values of the different scanning regions within the coverage of the SSB beam by performing weighted calculation on the first quantity and the second quantity; and
determining the scanning periods of the different scanning regions within the coverage of the SSB beam according to a comparison rule between the weight values and the scanning periods.

**16.** The method according to claim 13 or 14, wherein the method further comprises:

if the correspondence is the first correspondence, determining a first calculation rule based on the scanning periods corresponding to the scanning regions, a first scanning period, and a total quantity of ROs, wherein the first scanning period is a maximum value of a scanning period of a scanning region within the coverage of the SSB beam; and
determining a quantity of ROs corresponding to each scanning region according to the first calculation rule.

**17.** The method according to claim 14, wherein the method further comprises:

if the correspondence is the second correspondence, determining a second calculation rule based on the scanning periods corresponding to the scanning regions, a first scanning period, and a total quantity of competition-based preambles; and
determining a quantity of competition-based preambles corresponding to each scanning region according to the second calculation rule.

**18.** A communication apparatus, comprising:

a transceiver unit, configured to receive a first message, wherein the first message comprises information about a correspondence, and the correspondence is a correspondence between scanning periods of different scanning regions within coverage of a synchronization signal block SSB beam of a second communication apparatus and random access occasions ROs of the different scanning regions; and
a processing unit, configured to: determine a random access occasion RO based on a scanning region in which the first communication apparatus is located and the first message, and initiate random access.

**19.** The apparatus according to claim 18, wherein at least two scanning regions in different scanning regions correspond to different scanning periods.

**20.** The apparatus according to claim 19, wherein the scanning period is 5 milliseconds ms, 10 ms, 20 ms, 40 ms, 80 ms, or 160 ms.

**21.** The apparatus according to any one of claims 18 to 20, wherein at least two scanning regions in different scanning regions correspond to different quantities of ROs.

**22.** The apparatus according to any one of claims 18 to 21, wherein the information is an index of the correspondence.

**23.** The apparatus according to any one of claims 18 to 22, wherein the correspondence is a first correspondence or a second correspondence;

in the first correspondence, each scanning region corresponds to a plurality of ROs; and
in the second correspondence, different scanning regions correspond to one RO.

24. The apparatus according to claim 23, wherein the scanning region in the first correspondence or the second correspondence further corresponds to a plurality of competition-based random access preambles.

25. A communication apparatus, comprising:

a processing unit, configured to determine a correspondence between scanning periods of different scanning regions within coverage of a synchronization signal block SSB beam and random access occasions ROs of the different scanning regions; and
a transceiver unit, configured to send a first message, wherein the first message comprises information about the correspondence.

26. The apparatus according to claim 25, wherein at least two scanning regions in different scanning regions correspond to different scanning periods.

27. The apparatus according to claim 26, wherein the scanning period is 5 milliseconds ms, 10 ms, 20 ms, 40 ms, 80 ms, or 160 ms.

28. The apparatus according to any one of claims 25 to 27, wherein at least two scanning regions in different scanning regions correspond to different quantities of ROs.

29. The apparatus according to any one of claims 25 to 28, wherein the information is an index of the correspondence.

30. The apparatus according to any one of claims 25 to 29, wherein the correspondence is a first correspondence or a second correspondence;

in the first correspondence, each scanning region corresponds to a plurality of ROs; and
in the second correspondence, different scanning regions correspond to one RO.

31. The apparatus according to claim 30, wherein the scanning region in the first correspondence or the second correspondence further corresponds to a plurality of competition-based random access preambles.

32. The apparatus according to any one of claims 25 to 31, wherein the processing unit is further configured to:

obtain quantities of first communication apparatuses in the different scanning regions, wherein the quantities comprise a first quantity of first communication apparatuses that perform data exchange and a second quantity of first communication apparatuses that do not perform data exchange;
determine weight values of the different scanning regions within the coverage of the SSB beam by performing weighted calculation on the first quantity and the second quantity; and
determine the scanning periods of the different scanning regions within the coverage of the SSB beam according to a comparison rule between the weight values and the scanning periods.

33. The apparatus according to claim 30 or 31, wherein the processing unit is further configured to:

if the correspondence is the first correspondence, determine a first calculation rule based on the scanning periods corresponding to the scanning regions, a first scanning period, and a total quantity of ROs, wherein the first scanning period is a maximum value of a scanning period of a scanning region within the coverage of the SSB beam; and
determine a quantity of ROs corresponding to each scanning region according to the first calculation rule.

34. The apparatus according to claim 33, wherein the processing unit is further configured to:

if the correspondence is the second correspondence, determine a second calculation rule based on the scanning periods corresponding to the scanning regions, a first scanning period, and a total quantity of competition-based preambles; and
determine a quantity of competition-based preambles corresponding to each scanning region according to the second calculation rule.

35. A communication apparatus, comprising a processor and a memory, wherein

the memory stores a computer program; and
the processor is configured to execute the computer program stored in the memory, so that the method according to any one of claims 1 to 7 or claims 8 to 17 is performed.

36. A communication apparatus, comprising a logic circuit and an interface circuit, wherein

the interface circuit is configured to receive a first message, wherein the first message comprises information about a correspondence, and the correspondence is a correspondence between scanning periods of different scanning regions within coverage of a synchronization signal block SSB beam of a second communication apparatus and random access occasions ROs of the different scanning regions; and
the logic circuit is configured to perform the method according to any one of claims 1 to 7.

37. A communication apparatus, comprising a logic circuit and an interface circuit, wherein

the interface circuit is configured to send a first message, wherein the first message comprises information about a correspondence, and the correspondence is a correspondence between scanning periods of different scanning regions within coverage of a synchronization signal block SSB beam of a second communication apparatus and random access occasions ROs of the different scanning regions; and
the logic circuit is configured to perform the method according to any one of claims 8 to 17.

38. A computer-readable storage medium, wherein the computer storage medium stores computer-readable instructions, and when the computer-readable instructions are run on a communication apparatus, the method according to any one of claims 1 to 7 or claims 8 to 17 is performed.

39. A computer program product comprising a computer program or instructions, wherein when the computer program product runs on a computer, the method according to any one of claims 1 to 7 or claims 8 to 17 is performed.

Communication system 100

FIG. 1

FIG. 2

5G base
station

5G user plane
function (UPF)

Data network

Terminal

5G new radio

NG interface

Terrestrial
station

Xn interface

5G access and mobility
management function
(AMF)

Terminal

5G new radio

5G base
station

5G session
management function
(SMF)

5G control plane

FIG. 3

EP 4 171 158 A1

FIG. 4

| | |
|---|---|
| SSB 7 | |
| SSB 6 | |
| SSB 5 | |
| SSB 4 | 10 ms |
| SSB 3 | |
| SSB 2 | |
| SSB 1 | |
| SSB 0 | |

| | |
|---|---|
| SSB 7 | |
| SSB 6 | |
| SSB 5 | |
| SSB 4 | 10 ms |
| SSB 3 | |
| SSB 2 | |
| SSB 1 | |
| SSB 0 | |

| | |
|---|---|
| SSB 7 | |
| SSB 6 | |
| SSB 5 | |
| SSB 4 | 10 ms |
| SSB 3 | |
| SSB 2 | |
| SSB 1 | |
| SSB 0 | |

FIG. 5

FIG. 6

FIG. 7

EP 4 171 158 A1

First communication apparatus

Second communication apparatus

Step 801: Determine a correspondence between scanning periods of different scanning regions within coverage of an SSB beam and ROs of the different scanning regions

Step 802: Send a first message, where the first message includes information about the correspondence

Step 803: Receive the first message

Step 804: Determine an RO based on a scanning region in which the first communication apparatus is located and the first message, and initiate random access

FIG. 8

Conventional
technology

| | | | |
|---|---|---|---|

SSB 0   SSB 1   SSB 2   SSB 3

| 12 | 12 | 12 | 12 |
|---|---|---|---|

RO

This application

| | | | |
|---|---|---|---|

SSB 0   SSB 1   SSB 2   SSB 3

| 8 | 8 | 16 | 16 |
|---|---|---|---|

RO

FIG. 10

Transceiver unit 1101

Processing unit 1102

FIG. 11

Processing unit 1201

Transceiver unit 1202

FIG. 12

First communication apparatus 1300

Transceiver 1330

Processor 1310

Memory 1320

FIG. 13

First communication apparatus 1400

Interface circuit 1410

Logic circuit 1420

FIG. 14

Second communication apparatus 1500

| Transceiver 1530 | | Processor 1510 |

Memory 1520

FIG. 15

Second communication apparatus 1600

| Interface circuit 1610 | Logic circuit 1620 |

FIG. 16

**INTERNATIONAL SEARCH REPORT**

International application No.

**PCT/CN2021/102163**

| A. | CLASSIFICATION OF SUBJECT MATTER |
|---|---|

H04W 74/08(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 华为, 随机接入, 时机, 机会, 非地面网络, 卫星, 扫描, 区域, 同步信号块, 周期, 映射, 对应, 关联, RACH, RO, occasion, opportunity, NTN, non-terrestrial network, satellite, scan, area, SSB, period, mapping, associate

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 111866892 A (ZHANXUN SEMICONDUCTOR (NANJING) CO., LTD.) 30 October 2020 (2020-10-30)<br>description, paragraphs [0052]-[0074] | 1-14, 18-31, 35-39 |
| X | CN 109729580 A (HUAWEI TECHNOLOGIES CO., LTD.) 07 May 2019 (2019-05-07)<br>description paragraphs [0005]-[0106], claims 1-31 | 1-14, 18-31, 35-39 |
| A | WO 2020092059 A1 (IDAC HOLDINGS, INC.) 07 May 2020 (2020-05-07)<br>entire document | 1-39 |
| A | HUAWEI et al. ""Issues of RACH Procedure in Non-terrestrial Networks""<br>*3GPP TSG-RAN WG2 Meeting #106, R2-1907841*, 03 May 2019 (2019-05-03),<br>full text, section 2 | 1-39 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 July 2021** | **03 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/102163**

| Patent document cited in search report | | | Publication date (day/month/year) | Patent family member(s) | | | Publication date (day/month/year) |
|---|---|---|---|---|---|---|---|
| CN | 111866892 | A | 30 October 2020 | None | | | |
| CN | 109729580 | A | 07 May 2019 | BR | 112019027271 | A2 | 14 July 2020 |
| | | | | EP | 3621273 | A4 | 10 June 2020 |
| | | | | CN | 111512610 | A | 07 August 2020 |
| | | | | CN | 109729580 | B | 03 January 2020 |
| | | | | CA | 3066517 | A1 | 17 August 2019 |
| | | | | KR | 20200011987 | A | 04 February 2020 |
| | | | | EP | 3621273 | A1 | 11 March 2020 |
| | | | | WO | 2019137534 | A9 | 22 August 2019 |
| | | | | WO | 2019137534 | A1 | 18 July 2019 |
| WO | 2020092059 | A1 | 07 May 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010728144